# EUROPEAN PATENT APPLICATION

(11) **EP 4 745 648 A1**
(43) Date of publication of application: **20.05.2026**
(21) Application number: 25209413.1
(22) Date of filing: 17.10.2025
(51) Int. Cl.: G02B 27/00, G02B 27/01

(54) **PRESENTING VIRTUAL CONTENT OUTSIDE BOUNDARIES OF HEADS-UP DISPLAY**

(30) Priority: 13.11.2024 US 202418946277
(71) Applicant: Distance Technologies Oy, 00530 Helsinki (FI)
(72) Inventor: Carlsson, Thomas, 00530 Helsinki (FI); Strandborg, Mikko, 00530 Helsinki (FI); Savolainen, Petri, 00530 Helsinki (FI)
(74) Representative: Moosedog Oy

(57) **Abstract**

A relative location of each eye of user(s) (118) is determined with respect to an image plane of a three-dimensional (3D) heads-up display (HUD) (104, 204), and a relative location of a head or each eye of the user(s) is determined with respect to an image plane of a non-transparent display (106, 202), by utilising tracking means (102). A first light field image to be displayed via the 3D HUD is generated for producing a part of a synthetic light field (122). An image to be displayed via the non-transparent display is generated for producing another part of the synthetic light field. The first light field image and the image are simultaneously displayed via the 3D HUD and the non-transparent display, respectively, to produce the synthetic light field.

## Description

### TECHNICAL FIELD

The present disclosure relates to systems for presenting virtual content outside boundaries of heads-up displays (HUDs). The present disclosure also relates to methods for presenting virtual content outside boundaries of HUDs.

### BACKGROUND

Heads-up displays (HUDs) have become a pivotal technology in realm of vehicle user interfaces, allowing visual information to be presented to users without diverting their attention from their primary tasks, for example, such as driving a vehicle. Typically, HUDs are embedded into transparent surfaces, for example, such as windshields of vehicles, thereby enabling a seamless integration of a navigational cue, a speed indicator, a fuel indicator, and the like, within a real-world environment in which the vehicles are present.

However, existing HUD implementations are associated with several limitations. Firstly, a visibility of augmented-reality (AR) information is restricted to be displayed via a windshield of a vehicle or any other transparent surface. This often results in important visual data being partially cropped or displayed outside boundaries of the HUD, which prevents a user from fully viewing critical visual information, potentially compromising user's awareness and safety in the vehicle. Secondly, boundaries of the HUD are naturally constrained by an aerodynamic design of the vehicle, thereby restricting an overall display area for displaying visual information to the user. This results in visibility gaps when displaying crucial information, particularly at a periphery of the HUD, thereby resulting in incomplete information being displayed to the user. Thirdly, a hardware of the HUD itself introduces physical limitations, as a non-transparent component, such as a display module of the HUD, restrict a possible projection area within a field of view of the user.

Therefore, in light of the foregoing discussion, there exists a need to overcome the aforementioned drawbacks.

### SUMMARY

The present disclosure seeks to provide a system and a method which facilitate in presenting virtual content outside boundaries of a three-dimensional (3D) heads-up display (HUD), by way of displaying light field images and images simultaneously via the 3D HUD and a non-transparent display, respectively, in a time-efficient and a computationally-efficient manner. The aim of the present disclosure is achieved by a system and a method which incorporate presentation of virtual content outside boundaries of heads-up displays, as defined in the appended independent claims to which reference is made to. Advantageous features are set out in the appended dependent claims.

Throughout the description and claims of this specification, the words *"comprise", "include", "have",* and *"contain"* and variations of these words, for example *"comprising"* and *"comprises",* mean *"including but not limited to",* and do not exclude other components, items, integers or steps not explicitly disclosed also to be present. Moreover, the singular encompasses the plural unless the context otherwise requires. In particular, where the indefinite article is used, the specification is to be understood as contemplating plurality as well as singularity, unless the context requires otherwise.

### BRIEF DESCRIPTION OF THE DRAWINGS

FIGs. 1A and 1B illustrate a simplified example implementation of a system for presenting virtual content outside boundaries of a heads-up display, in accordance with an embodiment of the present disclosure;
FIG. 2 illustrates viewing zones of different components of a system for presenting virtual content outside boundaries of a heads-up display, in accordance with an embodiment of the present disclosure; and
FIG. 3 illustrates steps of a method for presenting virtual content outside boundaries of a heads-up display, in accordance with an embodiment of the present disclosure.

### DETAILED DESCRIPTION OF EMBODIMENTS

The following detailed description illustrates embodiments of the present disclosure and ways in which they can be implemented. Although some modes of carrying out the present disclosure have been disclosed, those skilled in the art would recognize that other embodiments for carrying out or practising the present disclosure are also possible.

In a first aspect, an embodiment of the present disclosure provides a system implemented in a vehicle, the system comprising:
tracking means;
a three-dimensional (3D) heads-up display (HUD) implemented using a transparent portion of a windshield of the vehicle;
a non-transparent display implemented using a non-transparent portion of the windshield or arranged on a dashboard of the vehicle, wherein a viewing zone of the non-transparent display lies beneath a viewing zone of the 3D HUD; and
at least one processor configured to:
   determine a relative location of each eye of at least one user with respect to an image plane of the 3D HUD, and a relative location of a head or each eye of the at least one user with respect to an image plane of the non-transparent display, by utilising the tracking means;
   generate a first light field image to be displayed via the 3D HUD for producing a part of a synthetic light field, based on the relative location of each eye of the at least one user with respect to the image plane of the 3D HUD;
   generate an image to be displayed via the non-transparent display for producing another part of the synthetic light field, based on the relative location of the head or each eye of the at least one user with respect to the image plane of the non-transparent display; and
   display the first light field image and the image simultaneously via the 3D HUD and the non-transparent display, respectively, to produce the synthetic light field.

In a second aspect, an embodiment of the present disclosure provides a method implemented in a vehicle, wherein the method comprises:
determining a relative location of each eye of at least one user with respect to an image plane of a three-dimensional (3D) heads-up display (HUD), and a relative location of a head or each eye of the at least one user with respect to an image plane of a non-transparent display, by utilising tracking means, wherein the 3D HUD is implemented using a transparent portion of a windshield of the vehicle, and the non-transparent display is implemented using a non-transparent portion of the windshield or is arranged on a dashboard of the vehicle, wherein a viewing zone of the non-transparent display lies beneath a viewing zone of the 3D HUD; and
generating a first light field image to be displayed via the 3D HUD for producing a part of a synthetic light field, based on the relative location of each eye of the at least one user with respect to the image plane of the 3D HUD;
generating an image to be displayed via the non-transparent display for producing another part of the synthetic light field, based on the relative location of the head or each eye of the at least one user with respect to the image plane of the non-transparent display; and
displaying the first light field image and the image simultaneously via the 3D HUD and the non-transparent display, respectively, to produce the synthetic light field.

The present disclosure provides the aforementioned system and the aforementioned method which facilitate in presenting virtual content outside boundaries of the 3D HUD, by way of displaying light field images and images simultaneously via the 3D HUD and the non-transparent display, respectively, in a time-efficient and a computationally-efficient manner. Herein, when the first light field image and the image are simultaneously displayed via the 3D HUD and the non-transparent display, respectively, an effective viewing area for presenting visual information to the at least one user is significantly increased. In this way, critical visual information can be displayed beyond boundaries of (namely, physical constraints of) the 3D HUD without any cropping unlike the prior art, thereby facilitating in providing a comprehensive visual experience to the at least one user for improved situational awareness and safety. This may, particularly, be beneficial when the at least one user is a driver of the vehicle. Moreover, such a dual-display approach may also enable enhanced display configurations, where the 3D HUD may prioritise displaying critical real-time information (for example, such as a speed, a fuel indication, a tyre pressure indication, an engine status, and the like) to the at least one user, and the non-transparent display may present secondary or supplementary information (for example, such as a navigation instruction, a digital map of a region in the real-world environment, and the like). Thus, this setup may potentially ensure that essential information is visible without overwhelming the at least one user, effectively expanding a utility and functionality of HUD systems in a way that maintains vehicle aerodynamics and HUD hardware limitations. The system and the method are simple, robust, fast, reliable, support real-time presentation of the virtual content outside boundaries of the 3D HUD, and can be implemented with ease.

Throughout the present disclosure, the term *"heads-up display"* refers to a display that is capable of displaying light field images. It will be appreciated that the heads-up display (HUD) is utilised to present visual information (namely, virtual content) represented in a given light field image to the user, without requiring the user to look considerably away from his/her usual viewpoint (for example, when looking towards a road on which the vehicle is being driven). Herein, the term *"visual information"* encompasses colour information represented in the given light field image, and additionally, optionally other attributes (for example, such as depth information, illuminance information, transparency information, and the like) associated with the given light field image. The term *"vehicle"* encompasses at least one of: a land vehicle (for example, such as a car, a truck and the like), an aircraft, a watercraft (for example, such as a boat). The car could be a convertible car or a hardtop car. It will also be appreciated that when the HUD is the 3D HUD, it means that it is capable of displaying the given light field image in an autostereoscopic manner, for example, by way of producing a synthetic light field. The 3D HUD is well-known in the art. The term *"given light field image"* encompasses at least the first light field image.

In some implementations, the 3D HUD comprises a light field display unit and an optical combiner, wherein the optical combiner is arranged on an optical path of the light field display unit and on an optical path of a real-world light field incoming via (the transparent portion of) the windshield of the vehicle, and wherein the light field display unit is utilised for producing said part of the synthetic light field augmenting the real-world light field. In such implementations, the windshield of the vehicle may be utilised as the optical combiner. The term *"optical combiner"* refers to a specialised equipment that is capable of reflecting a corresponding part of the synthetic light field towards a given eye of the user, whilst optically combining said corresponding part of the synthetic light field with the real-world light field. Optionally, the optical combiner is implemented by way of at least one of: a lens, a mirror, a semi-transparent mirror, a semi-transparent film, a semi-transparent flexible membrane, a prism, a beam splitter, an optical waveguide, a polarizer. Optical combiners are well-known in the art. It will be appreciated that the user may face the optical combiner in almost a straight manner, or may face the optical combiner in a diagonal manner (namely, obliquely or sideways). Optionally, a tilt angle of the optical combiner with respect to an image plane of the light field display unit lies in a range of 10 degrees and 75 degrees.

The term *"real-world light field"* refers to a light field emanating from a region of the real-world environment that is in front of the vehicle, and incoming via the windshield of the vehicle. Further, the term *"synthetic light field"* refers to a light field that is produced (namely, generated) synthetically by the 3D HUD (specifically, by the light field display unit of the 3D HUD) and/or by the non-transparent display. Specifically, the 3D HUD produces said part of the synthetic light field and the non-transparent display produces another part of the synthetic light field simultaneously. It will be appreciated that in case of the real-world light field, light from, for example, a natural light source (such as the Sun) and/or an artificial light source (such as a lamp, a bulb, a tube-light, or similar), is reflected off real-world objects (or their portions) to be incident towards each eye of the at least one user. In this way, visual information pertaining to said real-world objects is typically perceived by the given eye of the at least one user. On the other hand, in case of the synthetic light field, light emanating from the HUD is incident towards the eyes of the user. Advantageously, production of the synthetic light field augmenting the real-world light field provides a result that is similar to displaying a combined view of a virtual image augmenting a real-world image to the user.

Further, the term *"light field display unit"* refers to a specialised equipment that is capable of producing the synthetic light field. In other words, the light field display unit is utilised to display the given light field image to produce said part of the synthetic light field at a given resolution. Optionally, the light field display unit is implemented in a form of any one of: a hogel-based light field display unit, a lenticular array-based light field display unit, a parallax barrier-based light field display unit. All the aforementioned forms of light field display units are well-known in the art.

In other implementations, the 3D HUD comprises a transparent display, and optionally, a controllable parallax barrier. The term *"transparent display"* refers to a display that enables the user to view visual information represented in the light field images, while also being able to see-through the display to view a region of the real-world environment in front of the vehicle. The transparent display could, for example, be implemented as an organic light-emitting diode (OLED)-based transparent display, a micro light-emitting diode (µLED)-based transparent display, or a thin film electroluminescence (TFEL) based display (for example, such as Lumineq^{®}). Transparent displays and their types are well-known in the art. The controllable parallax barrier can be implemented as any one of: a switchable liquid crystal (LC) shutter array, a switchable LC barrier, a transparent/diffuse switchable film (for example, made of a polymer-dispersed liquid crystal (PDLC)). The aforementioned examples of the controllable parallax barrier are well-known in the art.

Throughout the present disclosure, the term *"non-transparent display"* refers to a non-HUD display that is capable of displaying images. Optionally, the non-transparent display is implemented as a two-dimensional (2D) display or a 3D display. It will be appreciated that in a case of the 2D display, the non-transparent display could be implemented using a projector and a projection screen. In such a case, the projection screen can be a part of the dashboard, or the non-transparent portion of the windshield. It will also be appreciated that when the viewing zone of the non-transparent display lies beneath the viewing zone of the 3D HUD, it means that with respect to a field of view of the at least one user, an area where visual information from the non-transparent display is visible to the at least one user, is present below an area where visual information from the 3D HUD is visible to the at least one user. However, the viewing zone of the non-transparent display and the viewing zone of the 3D HUD could optionally overlap partially, to enable a seamless transition therebetween.

Notably, the at least one processor controls an overall operation of the system. The at least one processor is communicably coupled to at least the tracking means, the 3D HUD, and the non-transparent display. In some implementations, the at least one processor is implemented as a processor of the light field display unit. In other implementations, the at least one processor is implemented as a processor of a computing device. Examples of the computing device include, but are not limited to, a laptop, a tablet, a phablet, and a smartphone. In yet other implementations, the at least one processor is implemented as a cloud server (namely, a remote server) that provides a cloud computing service.

Throughout the present disclosure, the term *"tracking means"* refers to a specialised equipment for detecting and/or following at least a location of a given eye and/or of the head of the at least one user. The given eye encompasses at least one of: a first eye, a second eye. The first eye could be one of a left eye and a right eye of the at least one user, whereas the second eye could be another of the left eye and the right eye. Optionally, the tracking means is implemented as at least one tracking camera. Optionally, the at least one tracking camera comprises at least one of: at least one visible-light camera, at least one IR camera. Examples of a given visible-light camera include, but are not limited to, a Red-Green-Blue (RGB) camera, a Red-Green-Blue-Alpha (RGB-A) camera, a Red-Green-Blue-Depth (RGB-D) camera, a Red-Green-Blue-White (RGBW) camera, a Red-Yellow-Yellow-Blue (RYYB) camera, a Red-Green-Green-Blue (RGGB) camera, a Red-Clear-Clear-Blue (RCCB) camera, a Red-Green-Blue-Infrared (RGB-IR) camera, and a monochrome camera. Optionally, the at least one tracking camera further comprises at least one depth camera, in addition to the at least one of: the at least one visible-light camera, the at least one IR camera. Examples of the at least one depth camera include, but are not limited to, a Time-of-Flight (ToF) camera, a light detection and ranging (LiDAR) camera, a Red-Green-Blue-Depth (RGB-D) camera, a laser rangefinder, a stereo camera, a plenoptic camera, a ranging camera, a Sound Navigation and Ranging (SONAR) camera. It will be appreciated that any combination of various different types of cameras (for example, such as the at least one visible-light camera, the at least one IR camera and the at least one depth camera) may be utilised in the tracking means. When different types of images captured by the various different types of cameras are utilised, at least the location of the given eye and of the head of the at least one user can be determined accurately for tracking purposes, as results obtained from one type of image can be used to refine results obtained from another type of image. The different types of images may be at least one of: visible-light images, IR images, depth images.

Optionally, when utilising the tracking means, the at least one processor is configured to process tracking data collected by the tracking means, to determine a location of each eye of the at least one user with respect to the image plane of the 3D HUD at a given time instant, and a location of the head or each eye of the at least one user with respect to the image plane of the non-transparent display at the given time instant. Optionally, in this regard, when the tracking means is implemented as the at least one tracking camera, the tracking data comprises a plurality of images (namely, visible-light images and/or IR images and/or depth images) representing at least the given eye and/or the head of the at least one user, wherein when processing the tracking data, the at least one processor is configured to employ at least one image processing algorithm. Such image processing algorithms are well-known in the art.

It will be appreciated that the at least one tracking camera is arranged to face the at least one user, to facilitate tracking of at least the location of the given eye and/or of the head of the at least one user. Optionally, said location is represented in a given coordinate space. As an example, the given coordinate space may be a Cartesian coordinate space. It will also be appreciated that irrespective of where the at least one tracking camera is arranged, a relative location of the at least one tracking camera with respect to the image plane of the 3D HUD and a relative location of the at least one tracking camera with respect to the image plane of the non-transparent display are fixed, and are pre-known to the at least one processor. Optionally, in this regard, when the tracking means are utilised to detect and/or follow the location of each eye of the at least one user, a location of each eye with respect to the at least one tracking camera is accurately known. Thus, the relative location of each eye of the at least one user with respect to the image plane of the 3D HUD can be determined, based on the relative location of the at least one tracking camera with respect to the image plane of the 3D HUD, and the location of each eye with respect to the at least one tracking camera. Similarly, optionally, when the tracking means are utilised to detect and/or follow the location of the head or each eye of the at least one user, a location of the head or each eye with respect to the at least one tracking camera is accurately known. Thus, the relative location of the head or each eye of the at least one user with respect to the image plane of the non-transparent display can be determined, based on the relative location of the at least one tracking camera with respect to the image plane of the non-transparent display, and the location of the head or each eye with respect to the at least one tracking camera. Optionally, the relative location of the head or each eye of the at least one user is represented in the given coordinate space. In some implementations, only a 2D view is to be presented to the user via the non-transparent display. In such implementations, the image could be generated based on the relative location of the head of the at least one user with respect to the image plane of the non-transparent display. In other words, precise relative locations of each eye of the at least one user may not be needed in such implementations.

Optionally, the first light field image comprising a plurality of pixels, wherein a first set of pixels from amongst the plurality of pixels is responsible for generating a first portion of said part of the synthetic light field that corresponds to the first eye, and a second set of pixels from amongst the plurality of pixels is responsible for generating a second portion of said part of the synthetic light field that corresponds to the second eye. Optionally, when the 3D HUD comprises the light field display unit and the optical combiner, and the first light field image is displayed via the 3D HUD, the optical combiner is employed to reflect the first portion of said part of the synthetic light field and the second portion of said part of the synthetic light field towards the first eye and the second eye of the at least one user, respectively, whilst optically combining the first portion and the second portion of said part of the synthetic light field with the real-world light field. Upon reflection of the first portion and the second portion of said part of the synthetic light field from the optical combiner, visual information corresponding to the first set of pixels and the second set of pixels of the first light field image is perceived by the first eye and the second eye, respectively, as a first virtual image and a second virtual image. It will be appreciated that the pixels belonging to the first set of pixels are not arranged in a continuous manner across the first light field image; similarly, the pixels belonging to the second set of pixels are also not arranged in a continuous manner across the first light field image. It will also be appreciated that if the optical combiner (as well as at least one optical layer of the light field display unit) were not curved, the pixels belonging to the first set of pixels and the pixels belonging to the second set of pixels would be arranged in alternating vertical stripes across a horizontal field of view of the first light field image, wherein each vertical stripe comprises one or more scanlines of pixels. This is because humans perceive depth mainly based on horizontal binocular parallax. Notably, the first light field image is considerably different from a regular 2D image that is displayed via a regular 2D display, because the (single) first light field image comprises visual information corresponding to the first eye as well as the second eye of the at least one user. Optionally, when generating the image, the at least one processor is configured to employ at least one image processing algorithm. The at least one image processing algorithm may comprise at least a virtual object generation algorithm. Such image processing algorithms are well-known in the art. The image could be a 2D image or a 3D image, depending on how the non-transparent displayed is implemented.

It will be appreciated that said part of the synthetic light field as well as another part of the synthetic light field represent a virtual content. In some implementations, the virtual content corresponds to at least one virtual object. Optionally, in this regard, the at least one processor is configured to generate the light field image from a perspective of the relative location of each eye of the at least one user with respect to the image plane of the 3D HUD, and generate the image from a perspective of the relative location of the head or each eye of the at least one user with respect to the image plane of the non-transparent display, by employing a 3D model of the at least one virtual object. The term *"virtual object"* refers to a computer-generated object (namely, a digital object). Examples of the at least one virtual object may include, but are not limited to, a virtual navigation tool, a virtual gadget, a virtual message, a virtual entity, a virtual entertainment media, a virtual vehicle or part thereof, and a virtual information. The term *"three-dimensional model of a virtual object"* refers to a data structure that comprises comprehensive information pertaining to the virtual object. Such a comprehensive information is indicative of at least one of: a plurality of features of the at least one virtual object or its portion, a shape and a size of the at least one virtual object or its portion, a pose of the at least one virtual object or its portion, a material of the at least one virtual object or its portion, a colour and an optical depth of the at least one virtual object or its portion. The 3D model of the at least one virtual object may be generated in the form of a 3D polygonal mesh, a 3D point cloud, a 3D surface cloud, a voxel-based model, or similar. Optionally, the 3D model of the at least one virtual object is generated in the given coordinate space. Optionally, the at least one processor is configured to store the 3D model of the at least one virtual object at a data repository communicably coupled to the at least one processor. It will be appreciated that the data repository could, for example, be implemented as a memory of the at least one processor, a memory of the at least one tracking camera, a memory of the computing device, a removable memory, a cloud-based database, or similar. Optionally, the system further comprises the data repository.

Alternatively, the virtual content could be in a form of a synthetic image generated from a real-world image. In such a case, said part of the light field image can be generated from a first synthetic image and a second synthetic image, which are generated by reprojecting the real-world image according to the relative location of the first eye and the second eye of the at least one user, respectively, with respect to the image plane of the 3D HUD. Moreover, for the non-transparent display that is a 3D display, a top part of the image can be generated in a similar manner as said part of the light field image is generated. While for the non-transparent display that is a 2D display, the top part of the image can be generated from a single synthetic image, which is generated by reprojecting the real-world image according to a line of sight of the at least one user.

Advantageously, when the first light field image and the image are simultaneously displayed via the 3D HUD and the non-transparent display, respectively, an effective viewing area for presenting visual information to the at least one user is significantly increased. In this way, critical visual information can be displayed beyond boundaries of (namely, physical constraints of) the 3D HUD without any cropping, thereby facilitating in providing a comprehensive visual experience to the at least one user for improved situational awareness and safety. It will be appreciated that such a dual-display approach may also enable enhanced display configurations, where the 3D HUD may prioritise displaying critical real-time information (for example, such as a speed, a fuel indication, a tyre pressure indication, an engine status, and the like) to the at least one user, and the non-transparent display may present secondary or supplementary information (for example, such as a navigation instruction, a digital map of a region in the real-world environment, and the like). This setup may potentially ensure that essential information is visible without overwhelming the at least one user, effectively expanding a utility and functionality of HUD systems in a way that maintains vehicle aerodynamics and HUD hardware limitations. It will be appreciated that a high-quality stereoscopic non-HUD display (namely, the non-transparent display) may enhance user tolerance for any limitations in a stereoscopic quality of the 3D HUD. Information that may be less legible or fully visible on the 3D HUD can instead be presented on the non-transparent display. This capability is particularly valuable in critical applications, such as defence, search and rescue operations, where information displayed below the 3D HUD can play an essential role.

Optionally, at least a top portion of the image and at least a portion of the first light field image that is to be displayed closest to the viewing zone of the non-transparent display are generated based on same virtual content. In this regard, the top portion of the image is a portion of the image that is responsible for producing a top portion of the another part of the synthetic light field (being produced by the non-transparent display). Moreover, the portion of the first light field image is a portion of the light field image that is responsible for producing a bottom portion of the part of the synthetic light field (being produced by the 3D HUD). A technical benefit of generating at least the top portion and at least said portion of the first light field image based on the same virtual content is that it provides a seamless visual transition between the top portion of the another part of the synthetic light field and the bottom portion of the part of the synthetic light field. This enables a consistent and uninterrupted presentation of at least one virtual object (corresponding to the same virtual content) across a shared boundary between the non-transparent display and the 3D HUD, thereby facilitating an imperceptible and cohesive merging of visual information at the shared boundary, and enhancing a visual continuity within a field of view of the at least one user.

Optionally, the system further comprises an additional non-transparent display arranged on a ceiling of the vehicle, wherein a viewing zone of the additional non-transparent display lies above the viewing zone of the 3D HUD, and wherein the at least one processor is configured to:
determine a relative location of the head or each eye of the at least one user with respect to an image plane of the additional non-transparent display, by utilising the tracking means;
generate an additional image to be displayed via the additional non-transparent display for producing an additional part of the synthetic light field, based on the relative location of the head or each eye of the at least one user with respect to the image plane of the additional non-transparent display; and
display the additional image via the additional non-transparent display, whilst displaying the first light field image and the image via the 3D HUD and the non-transparent display, to produce the synthetic light field.

A technical benefit of displaying the additional image via the additional non-transparent display, in addition to displaying the first light field image and the image, is that it provides an expanded vertical dimension for displaying the virtual content, which maps above the physical constraints of the 3D HUD. By arranging the additional non-transparent display above the viewing zone of the 3D HUD may allow for presenting visual information to the at least one user in a layered manner. Such a vertically-tiered arrangement of presenting the visual information (i.e., the virtual content) offers an immersive and organised display that aligns with a natural eye movement of the at least one user across different viewing levels. As a result, a given user (for example, a driver of the vehicle) would benefit from a comprehensive, structured presentation of the visual information without overcrowding the a viewing zone of the 3D HUD, thereby improving a situational awareness and a safety of the given user. Moreover, such an implementation may also enable a prioritisation of the virtual content based on its criticality and a location within a field of view of the given user.

It will be appreciated that determination of the relative location of the head or each eye of the at least one user with respect to the image plane of the additional non-transparent display is performed in a similar manner as discussed earlier with respect to the non-transparent display. Moreover, generation and display of the additional image are also performed in a similar manner, as discussed earlier with respect to the image that is displayed via the non-transparent display. Optionally, the non-transparent display is implemented as a 2D display or a 3D display. It will also be appreciated that when the viewing zone of the additional non-transparent display lies above the viewing zone of the 3D HUD, it means that with respect to the field of view of the at least one user, an area where visual information from the additional non-transparent display is visible to the at least one user, is present above the area where visual information from the 3D HUD is visible to the at least one user. However, the viewing zone of the additional non-transparent display and the viewing zone of the 3D HUD could optionally overlap partially, to enable a seamless transition therebetween. Herein, the *"ceiling"* of the vehicle refers to an upper portion of an interior surface of the vehicle.

Optionally, the system further comprises at least one additional non-transparent display arranged on at least one of two side supports of the windshield, wherein a viewing zone of the at least one additional non-transparent display lies on at least one of: a left side, a right side of the viewing zone of the 3D HUD, and wherein the at least one processor is configured to:
determine a relative location of the head or each eye of the at least one user with respect to an image plane of the at least one additional non-transparent display, by utilising the tracking means;
generate at least one additional image to be displayed via the at least one additional non-transparent display for producing at least one additional part of the synthetic light field, based on the relative location of the head or each eye of the at least one user with respect to the image plane of the at least one additional non-transparent display; and
display the at least one additional image via the at least one additional non-transparent display, whilst displaying the first light field image and the image via the 3D HUD and the non-transparent display, to produce the synthetic light field.

A technical benefit of displaying the at least one additional image via the at least one additional non-transparent display, in addition to displaying the first light field image and the image is that it facilitates in providing a lateral extension of an area for displaying the virtual content, beyond horizontal edges of the 3D HUD. Arranging the at least one additional non-transparent display on the at least one of two side supports of the windshield allows for presenting any contextual or peripheral visual information to the user. Thus, such an implementation allows for an immersive displaying of the virtual content that aligns with a peripheral vision of the at least one user, minimising a need for head movements and supporting quick glances to access supplementary visual information. Beneficially, this improves the situational awareness of the at least one user, allowing for an organized, multi-zonal display of information that enhances both safety and ease of use of the vehicle.

It will be appreciated that determination of the relative location of the head or each eye of the at least one user with respect to the image plane of the at least one additional non-transparent display is performed in a similar manner as discussed earlier with respect to the non-transparent display. Moreover, generation and display of the at least one additional image are also performed in a similar manner, as discussed earlier with respect to the image that is displayed via the non-transparent display. Optionally, the at least one non-transparent display is implemented as a 2D display or a 3D display. It will also be appreciated that when the viewing zone of the at least one additional non-transparent display lies on the at least one of: the left side, the right side, of the viewing zone of the 3D HUD, it means that with respect to the field of view of the at least one user, an area where visual information from the at least one additional non-transparent display is visible to the at least one user, is either towards the left side or the right side or both the left side and the right side of the area where visual information from the 3D HUD is visible to the at least one user. However, the viewing zone of the at least one additional non-transparent display and the viewing zone of the 3D HUD could optionally overlap partially, to enable a seamless transition therebetween. Optionally, when only one of the two side supports of the windshield is utilised for arranging the at least one additional non-transparent display, the one of the two side supports of the windshield can be a side support that lies towards a side of the vehicle at which a driver of the vehicle is seated. It is to be understood that some countries have a driver's seat on a left side, while other countries have a driver's seat on a right side. Herein, the *"side support"* of the windshield refers to a physical structure that is employed to hold the windshield. In an example, when the vehicle is a car, the side support could be an A-pillar of the car.

Optionally, the non-transparent display is a two-dimensional (2D) display, wherein the at least one processor is configured to:
detect when at least one virtual object is to be presented via the 3D HUD and the non-transparent display simultaneously;
determine a first optical depth at which the at least one virtual object is to be presented; and
determine a distance of the image plane of the non-transparent display from the at least one user, based on the relative location of the head of the at least one user with respect to the image plane of the non-transparent display,
wherein when generating the first light field image, the at least one processor is configured to:
determine a first portion, a second portion and a third portion of the first light field image that are to present the at least one virtual object, wherein the first portion of the first light field image is to be displayed farthest from the viewing zone of the non-transparent display, the second portion of the first light field image is to be displayed closest to the viewing zone of the non-transparent display, and the third portion of the first light field image lies between the first portion and the second portion;
generate the first portion of the first light field image for presenting the at least one virtual object at the first optical depth;
generate the second portion of the first light field image for presenting the at least one virtual object at a second optical depth that is within a predefined threshold distance from said distance of the image plane of the non-transparent display from the at least one user; and
generate sub-portions of the third portion of the first light field image for presenting the at least one virtual object at respective optical depths that interpolate between the second optical depth and the first optical depth, based on respective distances of the sub-portions from the second portion of the first light field image.

In this regard, when the non-transparent display is the 2D display, the at least one virtual object would be presented at a fixed optical depth. Moreover, when the at least one virtual object is to be presented via the 3D HUD and the non-transparent display simultaneously, it means that the at least one virtual object is intended to seamlessly span both the 3D HUD and the non-transparent display. Thus, presentation of the at least one virtual object via the 3D HUD is performed by way of generating the first portion, the second portion, and the third portion of the first light field image relative to the non-transparent display, in the aforesaid manner. Beneficially, presenting the at least one virtual object at strategically defined optical depths allows to ensure that the at least one virtual object appears consistently aligned across the 3D HUD and the non-transparent display. The second portion of the first light field image generated at the second optical depth that is within the predefined threshold distance from said distance of the image plane of the non-transparent display, minimizes depth discrepancies between the 3D HUD and the non-transparent display, thereby reducing any visual discordance. Additionally, interpolating the respective optical depths across the sub-portions of the third portion of the first light field image facilitates in providing a smooth, seamless visual transition of the at least one virtual object between the first optical depth and the second optical depth. Such a gradual optical depth adjustment enables in a natural depth blending of the at least one the virtual object for it appear highly accurate and realistic within the viewing zone of the 3D HUD and the viewing zone of the non-transparent display. This improves user's visual comfort and spatial awareness, as a depth perception of the at least one virtual object is improved.

It will be appreciated that the distance of the image plane of the non-transparent display from the at least one user is a native optical depth of the non-transparent display. Moreover, the predefined threshold distance is preferably less (for example, such as 10 centimetres), so that the second optical depth is approximately equal to the distance of the image plane of the non-transparent display from the at least one user. When the at least one virtual object is presented at the second optical depth that is within the predefined threshold distance (namely, that is similar to the native optical depth of the non-transparent display), there may not be any need for displaying different virtual images (representing the at least one virtual object) to the first eye and the second eye of the at least one user; in other words, a same virtual image could be shown to both eyes of the at least one user.

Since the at least one virtual object is generated by the at least one processor only, the first optical depth is accurately known to the at least one processor and it can be easily detected when the at least one virtual object is to be presented simultaneously. Furthermore, a location of the non-transparent display is fixed in the vehicle, and is pre-known to the at least one processor. Thus, the distance of the image plane of the non-transparent display from the at least one user can be easily calculated using the relative location of the head with respect to the image plane of the non-transparent display and the location of the non-transparent display, for example, by using a coordinate geometry-based technique.

Optionally, the non-transparent display is a 3D display having a touchscreen, wherein the image is a second light field image, wherein when generating the image, the at least one processor is configured to:
determine a distance of the image plane of the non-transparent display from the at least one user, based on the relative location of the head or each eye of the at least one user with respect to the image plane of the non-transparent display;
determine a portion of the second light field image that is to present a touch-based user interaction option; and
generate said portion of the second light field image for presenting the touch-based user interaction option at an optical depth that is within a predefined threshold distance from said distance of the image plane of the non-transparent display from the at least one user.

In this regard, since the second light field image is generated by the at least one processor itself, said portion of the second light field image that is to present the touch-based user interaction option is already accurately known to the at least one processor. When the touch-based user interaction option is presented at said optical depth that is within the predefined threshold distance (namely, that is similar to the native optical depth of the non-transparent display), there may not be any need for displaying different virtual images (representing the touch-based user interaction option) to the first eye and the second eye of the at least one user; in other words, a same virtual image could be shown to both eyes of the at least one user. Beneficially, due to this, user interaction experience and comfort is improved, by closely aligning said optical depth of the touch-based user interaction option with the native optical depth of the non-transparent display. This minimises visual discomfort and allows for accurate, touch-based interaction without the user needing to adjust his/her focus significantly, enhancing both accessibility and usability of interactive virtual content. In an example, the touch-based user interaction option could be a swipe-based interaction option, for example, such as picking up a landmark for navigation with a swipe gesture provided by the at least one user using said swipe-based interaction option. Information pertaining to how the distance of the image plane of the non-transparent display from the at least one user is determined, has been already discussed earlier in detail.

Optionally, the system further comprises at least one real-world facing camera, wherein the at least one processor is configured to:
detect when at least one virtual object is to be presented via the 3D HUD and the non-transparent display simultaneously;
capture at least one real-world image of a region of a real-world environment that lies in front of the vehicle, by utilising the at least one real-world facing camera; and
generate at least one synthetic image by utilising the at least one real-world image, based on the relative location of the head or each eye of the at least one user with respect to the image plane of the non-transparent display,
wherein when generating the image, the at least one processor is configured to generate at least a top portion of the image by utilising the at least one synthetic image.

The term *"real-world-facing camera"* refers to a camera that is arranged to face the region of the real-world environment that lies in front of the vehicle, and is employed to capture the at least one real-world image of said region of the real-world environment. The at least one real-world-facing camera could comprise at least one visible-light camera, and additionally, optionally, comprise at least one depth camera. When the at least one virtual object is to be presented via the 3D HUD and the non-transparent display simultaneously, it means that the at least one virtual object is intended to seamlessly span both the 3D HUD and the non-transparent display. The term *"synthetic image"* refers to an image representing a virtual representation of the region of the real-world environment that lies in front of the vehicle. Optionally, when generating the at least one synthetic image by utilising the at least one real-world image, the at least one processor is configured to at least reproject and/or crop the at least one real-world image, based on the relative location of the head or each eye of the at least one user with respect to the image plane of the non-transparent display. Once the at least one synthetic image is generated, at least said top portion (namely, a fading or blend area) of the image is generated using the at least one synthetic image. A technical benefit of generating at least said top portion of the image using the at least one synthetic image allows for providing a contextually-immersive and visually-cohesive experience to the at least one user, as the at least one virtual object to be displayed via the non-transparent display appears to be well-blended with said region of the real-world environment. This helps in blending the at least one virtual object naturally with ambient colours, especially, towards a boundary where the 3D HUD and the non-transparent display (namely, to hide differences in brightness, colour balance, reprojection, or similar). Beneficially, due to this, an additive quality of the at least one virtual object is enhanced, making the at least one virtual object to be well-integrated with user's actual surroundings. The aforesaid blend effect would also smooth a transition between the 3D HUD and the non-transparent display, reducing visual discrepancies and creating a seamless and immersive augmented-reality experience for the at least one user.

It will be appreciated that, for the non-transparent display that is a 3D display, the image can be generated from a first synthetic image and a second synthetic image, which are generated by reprojecting the at least one real-world image according to the relative location of the first eye and the second eye of the at least one user, respectively, with respect to the image plane of the non-transparent display. While for the non-transparent display that is a 2D display, the image can be generated from a single synthetic image, which is generated by reprojecting the at least one real-world image according to a line of sight of the at least one user.

Optionally, the at least one processor is configured to determine an amount of attenuation caused by the 3D HUD to a real-world light field passing therethrough, wherein when generating the image, the at least one processor is configured to generate intensity values of at least the top portion of the image, based on the amount of attenuation.

A technical benefit of this is that it allows to compensate for an attenuation caused to the real-world light field by the 3D HUD. If the amount of attenuation caused were not taken into account when generating the intensity values, the intensity values for at least said top portion of the image would be taken as intensity values of pixels in the at least one synthetic image (namely, as it is), wherein the at least one synthetic image is generated by utilising the at least one real-world image, as discussed earlier. When these intensity values add up with an actual light intensity of the real-world light field that is passing through the 3D HUD, it would produce a relatively brighter image of the real-world environment. This would not only make the at least one virtual object look darker as compared to at least one real-world object, but would also make the at least one real-world object look brighter than other real-world objects that can be seen through other portions of the 3D HUD. Thus, a darkening effect is optionally applied to mimic a reduction in a transmission of the real-world light through the 3D HUD.

The amount of attenuation can be determined in terms of a percentage by which the light intensity of the real-world light field reduces upon passing through the 3D HUD. As a first example, in case of a single user present in the vehicle, the light intensity is typically reduced by approximately 50 percent upon passing through the 3D HUD. This is because a first part and a second part of the real-world light field are redirected towards the first eye and the second eye, respectively. As a second example, in case of two users present in the vehicle, the light intensity may be reduced by approximately 75 percent. Therefore, the intensity values for of at least said top portion of the image can be generated to compensate for the percentage by which the light intensity reduces. So, in the aforementioned first example, the intensity values can be determined as approximately 50 percent of the intensity values of the pixels in the at least one synthetic image. Herein, the phrase *"approximately 50 percent"* refers to a percentage that lies in a range of 45 percent to 55 percent. On the other hand, in the aforementioned second example, the intensity values can be determined as approximately 75 percent of the intensity values of the pixels in the at least one synthetic image. Herein, the phrase *"approximately 75 percent"* refers to a percentage that lies in a range of 70 percent to 80 percent.

Optionally, the at least one processor is configured to determine an average intensity of a real-world light field passing through the 3D HUD,
wherein when generating the image, the at least one processor is configured to generate intensity values of at least a top portion of the image, based on the average intensity of the real-world light field.

A technical benefit of this is that it allows virtual content represented in the image (to be displayed via the non-transparent display) to adapt its brightness based on the real-world light field passing through the 3D HUD, creating a visually consistent blend with virtual content represented in the first light field image. By determining the average intensity of the real-world light field through the 3D HUD and adjusting the intensity values of at least said top portion of the image accordingly, the at least one processor enables in achieving an additive blending effect. Due to such additive blending effect, the virtual content to be presented near a boundary of the 3D HUD and the non-transparent display is brightened in order to match a natural brightness seen through the 3D HUD, especially in bright daylight conditions, thereby smoothing a transition between the 3D HUD and the non-transparent display. Such an implementation facilitates the at least one virtual object (corresponding to the virtual content) to appear more blended with the real environment, particularly under varying lighting conditions, such as daytime or nighttime, enhancing a realism and immersiveness of the at least one user. Optionally, the system further comprises at least one ambient light sensor arranged facing the real-world light field, the ambient light sensor is operable to sense the average intensity of the real-world light field passing through the 3D HUD. Additionally or alternatively, optionally, the at least one processor is configured to determine the average intensity based on a time of the day.

Optionally, the at least one processor is configured to determine a part of the image plane of the 3D HUD that is obscured by the non-transparent display, based on the relative location of the head or each eye of the at least one user with respect to the image plane of the 3D HUD, a position and an orientation of the non-transparent display in the vehicle, and a size of the non-transparent display,
wherein when generating the first light field image, the at least one processor is configured to:
determine a portion of the first light field image that corresponds to the part of the image plane of the 3D HUD that is obscured by the non-transparent display; and
depict at least one virtual object in a remaining portion of the first light field image only.

In this regard, from the relative location of the head or each eye of the at least one user, the at least one processor can map a view from a perspective of the at least one user and can ascertain a line-of-sight path between the eyes of the at least one user and the 3D HUD. Moreover, from the position, the orientation, and the size of the non-transparent display in the vehicle, the at least one processor can easily identify which region of the 3D HUD would fall directly behind the non-transparent display, and determine the part of the image plane of the 3D HUD that is obscured by the non-transparent display. Advantageously, by depicting the at least one virtual object in the remaining portion of the first light field image (that corresponds to a remaining part of the image plane of the 3D HUD that is not obscured) is that rendering of the at least one virtual object in areas that the user cannot see, can be avoided as that would not be beneficial. This reduces an overall utilisation of computational resources and a processing time of the at least one processor. It will be appreciated that since the first light field image is generated by the at least one processor itself, said portion of the first light field image that corresponds to the part of the image plane of the 3D HUD is already accurately known to the at least one processor. It will be appreciated that the part of the image plane of the 3D HUD that is obscured by the non-transparent display would keep changing with a change in a position of the head of the at least one user.

Optionally, the system further comprises a set of cameras arranged on an external body of the vehicle, wherein the at least one processor is configured to:
capture a set of real-world images of a region of a real-world environment that surrounds the vehicle, by utilising the set of cameras; and
generate at least one of: (i) a view of said region of the real-world environment, (ii) a 360-degree view of the vehicle in said region of the real-world environment, by utilising the set of real-world images;
wherein when generating the image, the at least one processor is configured to generate at least a background of the image by utilising the at least one of: (i) the view of said region of the real-world environment, (ii) the 360-degree view of the vehicle in said region of the real-world environment.

In this regard, the cameras of the set could be arranged on the external body of the vehicle (for example, such as a car) in a manner that said cameras face the region of the real-world environment that surrounds the vehicle. This enables the cameras to capture the set of real-world images of the region of the real-world environment that surrounds the vehicle. It will be appreciated that since poses (namely, positions and/or orientations) of the cameras in the set could be different (as they would likely be positioned at various locations for collectively capturing the 360-degree view of the vehicle), real-world images of the region would be captured from different perspectives of said poses of the cameras. Optionally, in this regard, when generating the at least one of: (i) the view of said region of the real-world environment, (ii) the 360-degree view of the vehicle, the at least one processor is configured to employ at least one image processing algorithm. The at least one image processing algorithm may comprise at least one of: an image stitching, an image merging algorithm, an image blending algorithm. Such image processing algorithms are well-known in the art. An image capturing operation is also well-known in the art.

A technical benefit of generating at least the background of the image in the aforesaid manner is that it enhances the driver's situational awareness by incorporating real time (or near-real time), contextually relevant background in the image that is displayed via the non-transparent 3D display. By using the view of said region and/or the 360-degree view of the vehicle, the background of the image can provide a continuous representation of the vehicle's surroundings, which can be highly beneficial for the at least one user for performing critical manoeuvres, like turning or reversing the vehicle. This allows a driver of the vehicle to better judge distances from curbs, obstacles, and other features present outside the vehicle. Consequently, this also provides real-time spatial awareness to the driver, supporting safer and more informed driving decisions.

Optionally, the system further comprises lane detectors, wherein the at least one processor is configured to determine a relative position of the vehicle with respect to lane markings on a road,
wherein when generating the image, the at least one processor is configured to:
depict external boundaries of the vehicle in the image by utilising a 3D model of the vehicle, based on the relative location of the head or each eye of the at least one user with respect to the image plane of the non-transparent display, and a position and an orientation of the image plane of the non-transparent display in the vehicle; and
depict, in the image, the lane markings with respect to the external boundaries of the vehicle, based on the relative position of the vehicle with respect to the lane markings.

A technical benefit of this is that it facilitates in providing the at least one user (specifically, the driver) of the vehicle an accurate, real-time spatial awareness of the position of the vehicle within its lane. This is because by depicting both the external boundaries of the vehicle and the lane markings within the image, the system enables in providing a clear, visually-aligned reference of how the vehicle is positioned relative to the road lanes. Beneficially, this enhances a safety by enabling the driver to quickly assess lane alignment and any deviations from lane markings, aiding in precise manoeuvring of the vehicle and reducing a risk of unintentional lane departures or accidents.

It will be appreciated that the lane detectors could be implemented using cameras and/or other types of sensors (for example, such as LiDAR sensors, IR sensors, Global Positioning System (GPS), Inertial Measurement Unit (IMU), magnetic sensors (when magnetic markers are embedded in roads), and the like). Such other types of sensors can be employed to complement the cameras, particularly in challenging environments (for example, such as low light, snow, and the like) where the cameras alone may not perform optimally (namely, accurately). It will also be appreciated that since a position of the vehicle is known to the at least one processor in real time, and a position of a given lane marking on a road could be known from a given lane detector, the relative position of the vehicle with respect to the given lane marking could be easily determined. Optionally, the 3D model of the vehicle is pre-stored at the data repository. The 3D model of the vehicle could be generated using a plurality of a 3D Computer-Aided Design (CAD) images.

Optionally, the at least one processor is configured to:
determine gaze directions of eyes of the at least one user, by utilising the tracking means;
detect whether the gaze directions of the eyes of the at least one user pass through the 3D HUD or the non-transparent display; and
when it is detected that the gaze directions pass through the image plane of the 3D HUD, perform at least one of:
lower a resolution of a next image to be displayed via the non-transparent display;
lower a frame rate at which images are to be displayed via the non-transparent display;
generate the images to present at least one virtual object at an optical depth that is within a predefined threshold distance from a distance of the image plane of the non-transparent display from the at least one user, when the non-transparent display is a 3D display.

Optionally, the at least one processor is configured to utilise the tracking data collected by the tracking means, for determining a gaze direction of a given eye of the at least one user. This allows for ascertaining when the at least one user gazes at the 3D HUD or the non-transparent display. Optionally, in this regard, when the tracking data comprises a plurality of images of a given eye of a given user, the at least one processor is configured to: extract a plurality of features of the given eye from a given image; identify at least one of: a pupil of the given eye, a position of the pupil with respect to corners of the given eye, a curvature of an eyelid of the given eye, a position of an eyelash of the given eye, a shape of the given eye, a size of the given eye, based on the plurality of features, to determine the gaze direction of the given eye.

When it is detected that the gaze directions pass through the image plane of the 3D HUD, and do not pass through the non-transparent display, the next image (to be displayed via the non-transparent display) may be generated at a lower resolution and/or the frame rate of displaying the images via the non-transparent display is lowered. Additionally or alternatively, the at least one virtual object is presented at the optical depth that is within the predefined threshold distance (namely, that is similar to the native optical depth of the non-transparent display). In such a case, there may not be any need for displaying different virtual images (representing the at least one virtual object) to the first eye and the second eye of the at least one user; in other words, a same virtual image could be shown to both eyes of the at least one user in a 2D manner, even when the non-transparent display is the 3D display. The predefined threshold distance is kept short (for example, such as 10 centimetres), so that the optical depth is approximately equal to the distance. Optionally, when it is detected that the gaze directions pass through the image plane of the non-transparent display, lower a resolution of a next light field image to be displayed via the 3D HUD.

Advantageously, lowering the resolution of the next image or lowering the frame rate facilitates in saving processing resources and processing time of the at least one processor. This is because since the at least one user is not even looking/gazing through the image plane of the non-transparent display (i.e., the non-transparent display lies in a peripheral region of a field of view of the at least one user), it would not be beneficial to generate the next image at a higher resolution, or to even display the images at a high frame rate. Similarly, it would not be beneficial to generate different virtual images to be presented to the eyes of the at least one user, even when the non-transparent display is the 3D display.

There will now be discussed an exemplary use case of implementing the aforementioned system in a military vehicle navigating a minefield with access to a pre-existing 3D map of the minefield. In this scenario, a 3D map of danger zones (i.e., mines) is provided to a driver of the military vehicle. For danger zones visible within the 3D HUD, such danger zones are displayed with stereoscopic depth (i.e., by way of generating the first light field image) to enhance the driver's spatial awareness and navigation accuracy. For danger zones outside the 3D HUD's field of view, an overhead 2D projector (namely, the non-transparent display) is used. The overhead 2D projector is calibrated with a layout of the vehicle and the driver's head position, allowing it to project locations of danger zone accurately onto interior surfaces of the military vehicle at accurate optical depths, even though a projection itself is 2D. This alignment enables the projected danger zone markers to match their real-world positions. In such an example, a danger zone may be located one meter in front of a right front wheel of the military vehicle. As a projected danger zone shifts into the viewing zone of the 3D HUD, a transition effect occurs in a peripheral area of a windshield of the military vehicle (approximately 5 to 10 centimeters wide). In this region, a 2D projection effect at an interior surface depth smoothly transitions to a correct 3D depth, as a danger zone marker enters further into the 3D HUD view. Such a gradual transition provides a seamless experience as danger zone markers move between the 3D HUD and the non-transparent display, maintaining the situational awareness for the driver.

The present disclosure also relates to the method as described above. Various embodiments and variants disclosed above, with respect to the aforementioned first aspect, apply *mutatis mutandis* to the method.

Optionally, the method further comprises:
determining a relative location of the head or each eye of the at least one user with respect to an image plane of an additional non-transparent display, by utilising the tracking means, wherein the additional non-transparent display is arranged on a ceiling of the vehicle, and wherein a viewing zone of the additional non-transparent display lies above the viewing zone of the 3D HUD;
generating an additional image to be displayed via the additional non-transparent display for producing an additional part of the synthetic light field, based on the relative location of the head or each eye of the at least one user with respect to the image plane of the additional non-transparent display; and
displaying the additional image via the additional non-transparent display, whilst displaying the first light field image and the image via the 3D HUD and the non-transparent display, to produce the synthetic light field.

Optionally, the method further comprises:
determining a relative location of the head or each eye of the at least one user with respect to an image plane of at least one additional non-transparent display, by utilising the tracking means, wherein the at least one additional non-transparent display is arranged on at least one of two side supports of the windshield, and wherein a viewing zone of the at least one additional non-transparent display lies on at least one of: a left side, a right side of the viewing zone of the 3D HUD;
generating at least one additional image to be displayed via the at least one additional non-transparent display for producing at least one additional part of the synthetic light field, based on the relative location of the head or each eye of the at least one user with respect to the image plane of the at least one additional non-transparent display; and
displaying the at least one additional image via the at least one additional non-transparent display, whilst displaying the first light field image and the image via the 3D HUD and the non-transparent display, to produce the synthetic light field.

Optionally, in the method, at least a top portion of the image and at least a portion of the first light field image that is to be displayed closest to the viewing zone of the non-transparent display are generated based on same virtual content.

Optionally, the non-transparent display is a two-dimensional (2D) display, wherein the method further comprises:
detecting when at least one virtual object is to be presented via the 3D HUD and the non-transparent display simultaneously;
determining a first optical depth at which the at least one virtual object is to be presented; and
determining a distance of the image plane of the non-transparent display from the at least one user, based on the relative location of the head of the at least one user with respect to the image plane of the non-transparent display,
wherein the step of generating the first light field image comprises:
determining a first portion, a second portion and a third portion of the first light field image that are to present the at least one virtual object, wherein the first portion of the first light field image is to be displayed farthest from the viewing zone of the non-transparent display, the second portion of the first light field image is to be displayed closest to the viewing zone of the non-transparent display, and the third portion of the first light field image lies between the first portion and the second portion;
generating the first portion of the first light field image for presenting the at least one virtual object at the first optical depth;
generating the second portion of the first light field image for presenting the at least one virtual object at a second optical depth that is within a predefined threshold distance from said distance of the image plane of the non-transparent display from the at least one user; and
generating sub-portions of the third portion of the first light field image for presenting the at least one virtual object at respective optical depths that interpolate between the second optical depth and the first optical depth, based on respective distances of the sub-portions from the second portion of the first light field image.

Optionally, in the method, the non-transparent display is a 3D display having a touchscreen, wherein the image is a second light field image, and wherein the step of generating the image comprises:
determining a distance of the image plane of the non-transparent display from the at least one user, based on the relative location of the head or each eye of the at least one user with respect to the image plane of the non-transparent display;
determining a portion of the second light field image that is to present a touch-based user interaction option; and
generating said portion of the second light field image for presenting the touch-based user interaction option at an optical depth that is within a predefined threshold distance from said distance of the image plane of the non-transparent display from the at least one user.

Optionally, the method further comprises:
detecting when at least one virtual object is to be presented via the 3D HUD and the non-transparent display simultaneously;
capturing at least one real-world image of a region of a real-world environment that lies in front of the vehicle, by utilising at least one real-world facing camera; and
generating at least one synthetic image by utilising the at least one real-world image, based on the relative location of the head or each eye of the at least one user with respect to the image plane of the non-transparent display,
wherein the step of generating the image comprises generating at least a top portion of the image by utilising the at least one synthetic image.

Optionally, the method further comprises determining an amount of attenuation caused by the 3D HUD to a real-world light field passing therethrough,
wherein the step of generating the image comprises generating intensity values of at least the top portion of the image, based on the amount of attenuation.

Optionally, the method further comprises determining an average intensity of a real-world light field passing through the 3D HUD,
wherein the step of generating the image comprises generating intensity values of at least a top portion of the image, based on the average intensity of the real-world light field.

Optionally, the method further comprises determining a part of the image plane of the 3D HUD that is obscured by the non-transparent display, based on the relative location of the head or each eye of the at least one user with respect to the image plane of the 3D HUD, a position and an orientation of the non-transparent display in the vehicle, and a size of the non-transparent display,
wherein the step of generating the first light field image comprises:
determining a portion of the first light field image that corresponds to the part of the image plane of the 3D HUD that is obscured by the non-transparent display; and
depicting at least one virtual object in a remaining portion of the first light field image only.

Optionally, the method further comprises:
capturing a set of real-world images of a region of a real-world environment that surrounds the vehicle, by utilising a set of cameras arranged on an external body of the vehicle; and
generating at least one of: (i) a view of said region of the real-world environment, (ii) a 360-degree view of the vehicle in said region of the real-world environment, by utilising the set of real-world images;
wherein the step of generating the image comprises generating at least a background of the image by utilising the at least one of: (i) the view of said region of the real-world environment, (ii) the 360-degree view of the vehicle in said region of the real-world environment.

Optionally, the method further comprises determining a relative position of the vehicle with respect to lane markings on a road by utilising lane detectors,
wherein the step of generating the image comprises:
depicting external boundaries of the vehicle in the image by utilising a 3D model of the vehicle, based on the relative location of the head or each eye of the at least one user with respect to the image plane of the non-transparent display, and a position and an orientation of the image plane of the non-transparent display in the vehicle; and
depicting, in the image, the lane markings with respect to the external boundaries of the vehicle, based on the relative position of the vehicle with respect to the lane markings.

Optionally, the method further comprises:
determining gaze directions of eyes of the at least one user, by utilising the tracking means;
detecting whether the gaze directions of the eyes of the at least one user pass through the 3D HUD or the non-transparent display; and
when it is detected that the gaze directions pass through the image plane of the 3D HUD, performing at least one of:
lowering a resolution of a next image to be displayed via the non-transparent display;
lowering a frame rate at which images are to be displayed via the non-transparent display;
generating the images to present at least one virtual object at an optical depth that is within a predefined threshold distance from a distance of the image plane of the non-transparent display from the at least one user, when the non-transparent display is a 3D display.

### DETAILED DESCRIPTION OF THE DRAWINGS

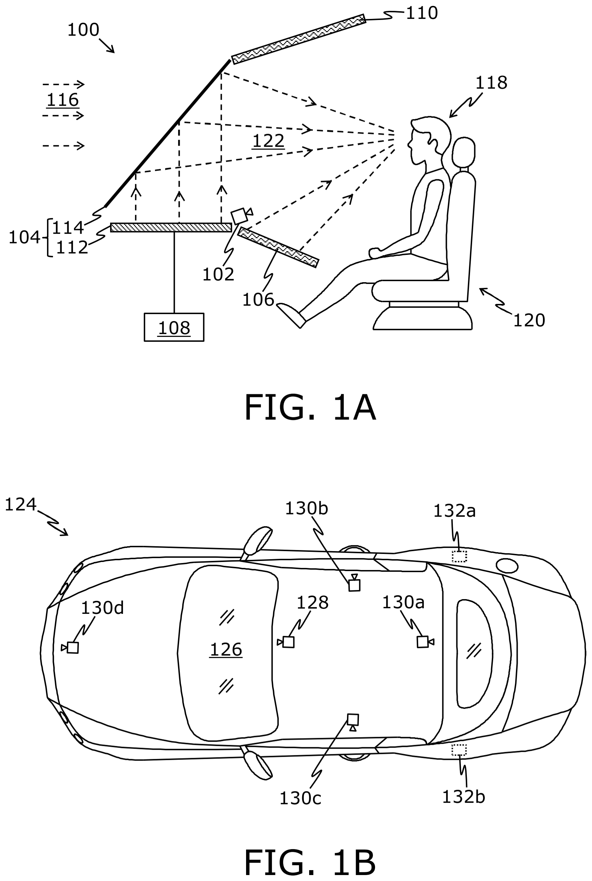

Referring to FIGs. 1A and 1B, illustrated is a simplified example implementation of a system **100** for presenting virtual content outside boundaries of a heads-up display, in accordance with an embodiment of the present disclosure. With reference to FIGs. 1A and 1B, the system **100** is shown to be implemented in the vehicle (for example, such as a car). For sake of simplicity and clarity, some components of the system **100** are shown to be represented in FIG. 1A, while other components of the system **100** are shown to be represented in FIG. 1B.

With reference to FIG. 1A, the system **100** comprises tracking means **102,** a three-dimensional (3D) heads-up display (HUD) **104,** a non-transparent display **106,** and at least one processor (for example, depicted as a processor **108).** Optionally, the system **100** further comprises an additional non-transparent display **110,** wherein the additional non-transparent display **110** is arranged on a ceiling of the vehicle, and wherein a viewing zone of the additional non-transparent display **110** lies above a viewing zone of the 3D HUD **104.** The 3D HUD **104** is implemented using a transparent portion of a windshield of the vehicle. In some implementations, as shown, the 3D HUD **104** comprises a light field display unit **112** and an optical combiner **114,** wherein the optical combiner **114** is arranged on an optical path of the light field display unit **112** and on an optical path of a real-world light field **116.** In such implementations, the windshield of the vehicle may be utilised as the optical combiner **114.** However, in other implementations, the 3D HUD **104** may comprise a transparent display with a multiscopic optical element. The non-transparent display **106** is arranged on a dashboard of the vehicle, wherein a viewing zone of the non-transparent display **106** lies beneath the viewing zone of the 3D HUD **104.** The tracking means 102 is shown to be implemented, for example, as a tracking camera. Optionally, the tracking means 102 is utilised for tracking a location of a head and each eye of a user 118. The user 118 is shown to be seated on a seat 120 of the vehicle. Optionally, the system 100 further comprises at least one additional non-transparent display (not shown) arranged on at least one of two side supports of the windshield (for example, two A-pillars in a case where the vehicle is the car), wherein a viewing zone of the at least one additional non-transparent display lies on at least one of: a left side, a right side of the viewing zone of the 3D HUD 104. The processor 108 is communicably coupled to the tracking means 102, the 3D HUD 104, the non-transparent display 106, and optionally, to the additional non-transparent display 110.

When the system 100 is in use, the processor 108 is configured to: generate a first light field image to be displayed via the 3D HUD 104 for producing a part of a synthetic light field 122; generate an image to be displayed via the non-transparent display 106 for producing another part of the synthetic light field 122; and display the first light field image and the image simultaneously via the 3D HUD 104 and the non-transparent display 106, respectively, to produce the synthetic light field 122.

With reference to FIG. 1B, there is shown a simplified schematic top view of the vehicle 124 in which the system 100 (as shown in FIG. 1A) is implemented. As shown, a windshield 126 of the vehicle 124 is utilised as the optical combiner 114 (as shown in FIG. 1A). Optionally, the system 100 further comprises at least one real-world facing camera (for example, depicted as a real-world facing camera 128), a set of cameras (for example, depicted as a set of four cameras **130a, 130b, 130c,** and **130d),** lane detectors (for example, depicted as two lane detectors **132a** and **132b).** The real-world facing camera **128** is utilised to capture at least one real-world image of a region of a real-world environment that lies in front of the vehicle **124.** The set of cameras **130a-d** are arranged on four different sides of an external body of the vehicle **124,** wherein the set of cameras **130a-d** is utilised for capturing a set of real-world images of a region of a real-world environment that surrounds the vehicle **124.** Optionally, the processor **108** (as shown in FIG. 1A) is communicably coupled to the real-world facing camera **128,** the cameras **130a-d,** and the lane detectors **132a-b.**

It may be understood by a person skilled in the art that FIGs. 1A and 1B include simplified example implementations of the system **100,** for sake of clarity, which should not unduly limit the scope of the claims herein. It is to be understood that a specific implementation of the system **100** is not to be construed as limiting it to specific numbers or types of tracking means, 3D HUDs, non-transparent displays, processors, additional non-transparent displays, real-world facing cameras, sets of cameras, and lane detectors. The person skilled in the art will recognize many variations, alternatives, and modifications of embodiments of the present disclosure.

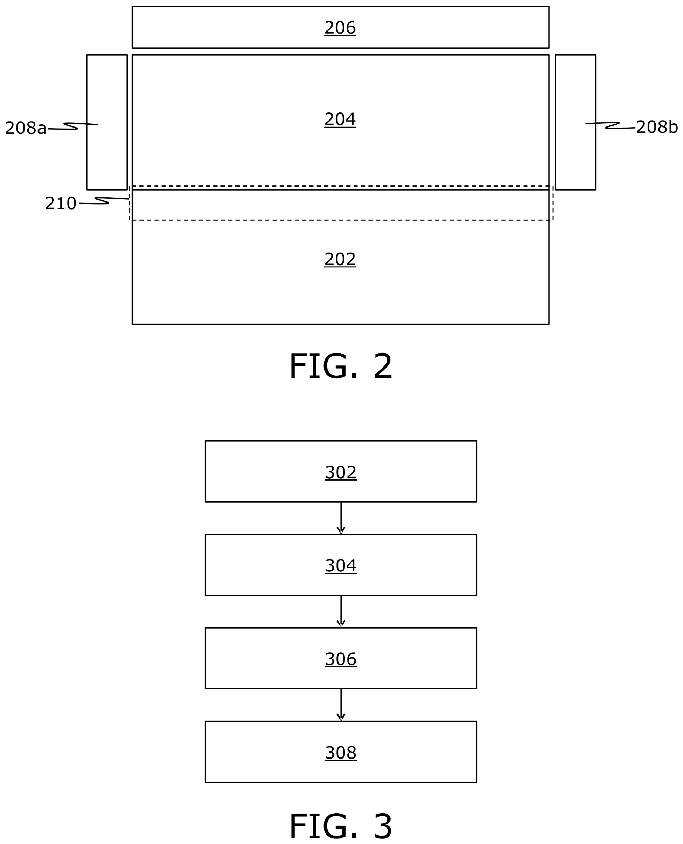

Referring to FIG. 2, illustrated are viewing zones of different components of a system for presenting virtual content outside boundaries of a heads-up display, in accordance with an embodiment of the present disclosure. As shown, a viewing zone of a non-transparent display **202** lies beneath a viewing zone of a three-dimensional (3D) heads-up display (HUD) **204.** A viewing zone of an additional non-transparent **206** display lies above the viewing zone of the 3D HUD **204.** Viewing zones of two additional non-transparent displays **208a** and **208b** lie on a left side and a right side of the viewing zone of the 3D HUD **204,** respectively. A blending zone **210** (depicted using a dashed box) represents a transition area between the viewing zone of the non-transparent display **202** and the viewing zone of the 3D HUD **204.** It will be appreciated that the aforesaid viewing zones may have shapes and/or sizes different from those as shown in FIG. 2.

FIG. 2 is merely an example, which should not unduly limit the scope of the claims herein. A person skilled in the art will recognize many variations, alternatives, and modifications of embodiments of the present disclosure.

Referring to FIG. 3, illustrated are steps of a method for presenting virtual content outside boundaries of a heads-up display, in accordance with an embodiment of the present disclosure. At step **302,** a relative location of each eye of at least one user is determined with respect to an image plane of a three-dimensional (3D) heads-up display (HUD), and a relative location of a head or each eye of the at least one user is determined with respect to an image plane of a non-transparent display, by utilising tracking means, wherein the 3D HUD is implemented using a transparent portion of a windshield of the vehicle, and the non-transparent display is implemented using a non-transparent portion of the windshield or is arranged on a dashboard of the vehicle, wherein a viewing zone of the non-transparent display lies beneath a viewing zone of the 3D HUD. At step **304,** a first light field image to be displayed via the 3D HUD is generated for producing a part of a synthetic light field, based on the relative location of each eye of the at least one user with respect to the image plane of the 3D HUD. At step **306,** an image to be displayed is generated via the non-transparent display for producing another part of the synthetic light field, based on the relative location of the head or each eye of the at least one user with respect to the image plane of the non-transparent display. At step **308,** the first light field image and the image are simultaneously displayed via the 3D HUD and the non-transparent display, respectively, to produce the synthetic light field.

The aforementioned steps are only illustrative and other alternatives can also be provided where one or more steps are added, one or more steps are removed, or one or more steps are provided in a different sequence without departing from the scope of the claims herein.

## Claims

1. A system (100) implemented in a vehicle (124), the system comprising:
tracking means (102);
a three-dimensional (3D) heads-up display (HUD) (104, 204) implemented using a transparent portion of a windshield (126) of the vehicle;
a non-transparent display (106, 202) implemented using a non-transparent portion of the windshield or arranged on a dashboard of the vehicle, wherein a viewing zone of the non-transparent display lies beneath a viewing zone of the 3D HUD; and
at least one processor (108) configured to:
determine a relative location of each eye of at least one user (118) with respect to an image plane of the 3D HUD, and a relative location of a head or each eye of the at least one user with respect to an image plane of the non-transparent display, by utilising the tracking means;
generate a first light field image to be displayed via the 3D HUD for producing a part of a synthetic light field (122), based on the relative location of each eye of the at least one user with respect to the image plane of the 3D HUD;
generate an image to be displayed via the non-transparent display for producing another part of the synthetic light field, based on the relative location of the head or each eye of the at least one user with respect to the image plane of the non-transparent display; and
display the first light field image and the image simultaneously via the 3D HUD and the non-transparent display, respectively, to produce the synthetic light field.

2. The system (100) of claim 1, further comprising an additional non-transparent display (110, 206) arranged on a ceiling of the vehicle (124), wherein a viewing zone of the additional non-transparent display lies above the viewing zone of the 3D HUD (104, 204), and wherein the at least one processor (108) is configured to:
determine a relative location of the head or each eye of the at least one user (118) with respect to an image plane of the additional non-transparent display, by utilising the tracking means (102);
generate an additional image to be displayed via the additional non-transparent display for producing an additional part of the synthetic light field (122), based on the relative location of the head or each eye of the at least one user with respect to the image plane of the additional non-transparent display; and
display the additional image via the additional non-transparent display, whilst displaying the first light field image and the image via the 3D HUD and the non-transparent display, to produce the synthetic light field.

3. The system (100) of any of the preceding claims, further comprising at least one additional non-transparent display (208a-b) arranged on at least one of two side supports of the windshield (126), wherein a viewing zone of the at least one additional non-transparent display lies on at least one of: a left side, a right side of the viewing zone of the 3D HUD (104, 204), and wherein the at least one processor (108) is configured to:
determine a relative location of the head or each eye of the at least one user (118) with respect to an image plane of the at least one additional non-transparent display, by utilising the tracking means (102);
generate at least one additional image to be displayed via the at least one additional non-transparent display for producing at least one additional part of the synthetic light field (122), based on the relative location of the head or each eye of the at least one user with respect to the image plane of the at least one additional non-transparent display; and
display the at least one additional image via the at least one additional non-transparent display, whilst displaying the first light field image and the image via the 3D HUD and the non-transparent display, to produce the synthetic light field.

4. The system (100) of any of the preceding claims, wherein at least a top portion of the image and at least a portion of the first light field image that is to be displayed closest to the viewing zone of the non-transparent display (106, 202) are generated based on same virtual content.

5. The system (100) of any of the preceding claims, wherein the non-transparent display (106, 202) is a two-dimensional (2D) display, wherein the at least one processor (108) is configured to:
detect when at least one virtual object is to be presented via the 3D HUD (104, 204) and the non-transparent display simultaneously;
determine a first optical depth at which the at least one virtual object is to be presented; and
determine a distance of the image plane of the non-transparent display from the at least one user (118), based on the relative location of the head of the at least one user with respect to the image plane of the non-transparent display,
wherein when generating the first light field image, the at least one processor is configured to:
determine a first portion, a second portion and a third portion of the first light field image that are to present the at least one virtual object, wherein the first portion of the first light field image is to be displayed farthest from the viewing zone of the non-transparent display, the second portion of the first light field image is to be displayed closest to the viewing zone of the non-transparent display, and the third portion of the first light field image lies between the first portion and the second portion;
generate the first portion of the first light field image for presenting the at least one virtual object at the first optical depth;
generate the second portion of the first light field image for presenting the at least one virtual object at a second optical depth that is within a predefined threshold distance from said distance of the image plane of the non-transparent display from the at least one user (118); and
generate sub-portions of the third portion of the first light field image for presenting the at least one virtual object at respective optical depths that interpolate between the second optical depth and the first optical depth, based on respective distances of the sub-portions from the second portion of the first light field image.

6. The system (100) of any of the preceding claims, wherein the non-transparent display (106, 202) is a 3D display having a touchscreen, wherein the image is a second light field image, and wherein when generating the image, the at least one processor (108) is configured to:
determine a distance of the image plane of the non-transparent display from the at least one user (118), based on the relative location of the head or each eye of the at least one user with respect to the image plane of the non-transparent display;
determine a portion of the second light field image that is to present a touch-based user interaction option; and
generate said portion of the second light field image for presenting the touch-based user interaction option at an optical depth that is within a predefined threshold distance from said distance of the image plane of the non-transparent display from the at least one user.

7. The system (100) of any of the preceding claims, further comprising at least one real-world facing camera (128), wherein the at least one processor (108) is configured to:
detect when at least one virtual object is to be presented via the 3D HUD (104, 204) and the non-transparent display (106, 202) simultaneously;
capture at least one real-world image of a region of a real-world environment that lies in front of the vehicle (124), by utilising the at least one real-world facing camera; and
generate at least one synthetic image by utilising the at least one real-world image, based on the relative location of the head or each eye of the at least one user (118) with respect to the image plane of the non-transparent display,
wherein when generating the image, the at least one processor is configured to generate at least a top portion of the image by utilising the at least one synthetic image.

8. The system (100) of claim 7, wherein the at least one processor (108) is configured to determine an amount of attenuation caused by the 3D HUD (104, 204) to a real-world light field (116) passing therethrough,
wherein when generating the image, the at least one processor is configured to generate intensity values of at least the top portion of the image, based on the amount of attenuation.

9. The system (100) of any of the preceding claims, wherein the at least one processor (108) is configured to determine an average intensity of a real-world light field (116) passing through the 3D HUD (104, 204),
wherein when generating the image, the at least one processor is configured to generate intensity values of at least a top portion of the image, based on the average intensity of the real-world light field.

10. The system (100) of any of the preceding claims, wherein the at least one processor (108) is configured to determine a part of the image plane of the 3D HUD (104, 204) that is obscured by the non-transparent display (106, 202), based on the relative location of the head or each eye of the at least one user (118) with respect to the image plane of the 3D HUD, a position and an orientation of the non-transparent display in the vehicle (124), and a size of the non-transparent display,
wherein when generating the first light field image, the at least one processor is configured to:
determine a portion of the first light field image that corresponds to the part of the image plane of the 3D HUD that is obscured by the non-transparent display; and
depict at least one virtual object in a remaining portion of the first light field image only.

11. The system (100) of any of the preceding claims, further comprising a set of cameras (130a-d) arranged on an external body of the vehicle (124), wherein the at least one processor (108) is configured to:
capture a set of real-world images of a region of a real-world environment that surrounds the vehicle, by utilising the set of cameras; and
generate at least one of: (i) a view of said region of the real-world environment, (ii) a 360-degree view of the vehicle in said region of the real-world environment, by utilising the set of real-world images;
wherein when generating the image, the at least one processor is configured to generate at least a background of the image by utilising the at least one of: (i) the view of said region of the real-world environment, (ii) the 360-degree view of the vehicle in said region of the real-world environment.

12. The system (100) of any of the preceding claims, further comprising lane detectors (132a-b), wherein the at least one processor (108) is configured to determine a relative position of the vehicle (124) with respect to lane markings on a road,
wherein when generating the image, the at least one processor is configured to:
depict external boundaries of the vehicle in the image by utilising a 3D model of the vehicle, based on the relative location of the head or each eye of the at least one user (118) with respect to the image plane of the non-transparent display (106, 202), and a position and an orientation of the image plane of the non-transparent display in the vehicle; and
depict, in the image, the lane markings with respect to the external boundaries of the vehicle, based on the relative position of the vehicle with respect to the lane markings.

13. The system (100) of any of the preceding claims, wherein the at least one processor (108) is configured to:
determine gaze directions of eyes of the at least one user (118), by utilising the tracking means (102);
detect whether the gaze directions of the eyes of the at least one user pass through the 3D HUD (104, 204) or the non-transparent display (106, 202); and
when it is detected that the gaze directions pass through the image plane of the 3D HUD, perform at least one of:
lower a resolution of a next image to be displayed via the non-transparent display;
lower a frame rate at which images are to be displayed via the non-transparent display;
generate the images to present at least one virtual object at an optical depth that is within a predefined threshold distance from a distance of the image plane of the non-transparent display from the at least one user, when the non-transparent display is a 3D display.

14. A method implemented in a vehicle (124), wherein the method comprises:
determining a relative location of each eye of at least one user (118) with respect to an image plane of a three-dimensional (3D) heads-up display (HUD) (104, 204), and a relative location of a head or each eye of the at least one user with respect to an image plane of a non-transparent display (106, 202), by utilising tracking means (102), wherein the 3D HUD is implemented using a transparent portion of a windshield (126) of the vehicle, and the non-transparent display is implemented using a non-transparent portion of the windshield or is arranged on a dashboard of the vehicle, wherein a viewing zone of the non-transparent display lies beneath a viewing zone of the 3D HUD; and
generating a first light field image to be displayed via the 3D HUD for producing a part of a synthetic light field (122), based on the relative location of each eye of the at least one user with respect to the image plane of the 3D HUD;
generating an image to be displayed via the non-transparent display for producing another part of the synthetic light field, based on the relative location of the head or each eye of the at least one user with respect to the image plane of the non-transparent display; and
displaying the first light field image and the image simultaneously via the 3D HUD and the non-transparent display, respectively, to produce the synthetic light field.

15. The method of claim 14, wherein the non-transparent display (106, 202) is a two-dimensional (2D) display, and wherein the method further comprises:
detecting when at least one virtual object is to be presented via the 3D HUD (104, 204) and the non-transparent display simultaneously;
determining a first optical depth at which the at least one virtual object is to be presented; and
determining a distance of the image plane of the non-transparent display from the at least one user (118), based on the relative location of the head of the at least one user with respect to the image plane of the non-transparent display,
wherein the step of generating the first light field image comprises:
determining a first portion, a second portion and a third portion of the first light field image that are to present the at least one virtual object, wherein the first portion of the first light field image is to be displayed farthest from the viewing zone of the non-transparent display, the second portion of the first light field image is to be displayed closest to the viewing zone of the non-transparent display, and the third portion of the first light field image lies between the first portion and the second portion;
generating the first portion of the first light field image for presenting the at least one virtual object at the first optical depth;
generating the second portion of the first light field image for presenting the at least one virtual object at a second optical depth that is within a predefined threshold distance from said distance of the image plane of the non-transparent display from the at least one user; and
generating sub-portions of the third portion of the first light field image for presenting the at least one virtual object at respective optical depths that interpolate between the second optical depth and the first optical depth, based on respective distances of the sub-portions from the second portion of the first light field image.
